# NEUE EUROPÄISCHE PATENTSCHRIFT

(11) **EP 2 644 267 B2**
(45) Veröffentlichungstag und Bekanntmachung des Hinweises auf die Entscheidung über den Einspruch: **20.01.2021**
(45) Hinweis auf die Patenterteilung: 08.11.2017
(21) Anmeldenummer: 12162517.2
(22) Anmeldetag: 30.03.2012
(51) Int. Cl.: B01J 20/28, B01J 20/04, B01J 20/30, B01D 53/04, B01D 53/50, B01D 53/83

(54) **Aktivierung eines Erdalkalicarbonat und Erdalkalihydroxid enthaltenden Materials für die trockene Rauchgasreinigung**
Activation of an alkaline earth calcium carbonate and/or materials containing alkaline earth calcium carbonate for dry cleaning of waste gas
Activation d'un matériau contenant un carbonate alcalino-terreux et/ou un hydroxyde alcalino-terreux pour le nettoyage de gaz de fumée par voie sèche

(43) Veröffentlichungstag der Anmeldung: 02.10.2013
(73) Patentinhaber: Rheinkalk GmbH, 42489 Wülfrath (DE)
(72) Erfinder: Pickbrenner, Arnd, 42489 Wülfrath (DE); Sindram, Martin, 58256 Ennepetal (DE); Pust, Christopher, 40625 Düsseldorf (DE)
(74) Vertreter: Cohausz & Florack

(56) Entgegenhaltungen:
- EP-A1- 0 613 712
- EP-A1- 0 748 766
- EP-B1- 0 861 209
- EP-B1- 2 328 675
- WO-A1-92/01509
- WO-A1-2006/113301
- WO-A1-2011/039034
- WO-A1-2013/034314
- WO-A1-2013/034315
- CA-A1- 2 707 959
- CN-A- 85 105 415
- DE-A1- 2 252 710
- DE-A1-102009 045 278
- DE-A1-102011 112 657
- DE-C2- 3 230 472
- JP-A- 7 149 580
- JP-A- 2003 164 757
- JP-A- 2006 169 062
- JP-A- 2009 057 254
- JP-A- 2010 064 040
- UA-U- 44 170
- US-A- 4 061 593
- US-B1- 7 314 847
- DUFFY A ET AL: "Investigations on the adsorption of acidic gases using activated dolomite", CHEMICAL ENGINEERING JOURNAL, ELSEVIER SEQUOIA, LAUSANNE, CH, Bd. 117, Nr. 3, 15. April 2006 (2006-04-15), Seiten 239-244, XP028036026, ISSN: 1385-8947, DOI: 10.1016/J.CEJ.2005.11.016 [gefunden am 2006-04-15]
- MASANORI SAKAI ET AL: "Simultaneous Removal of SOx and NOx Using Slaked Lime at Low Temperature", INDUSTRIAL & ENGINEERING CHEMISTRY RESEARCH, Bd. 41, Nr. 20, 10. September 2002 (2002-09-10), Seiten 5029-5033, XP55035561, ISSN: 0888-5885, DOI: 10.1021/ie010914+
- P. STASZCZUK ET AL: "Investigations on the adsorption properties and porosity of natural and thermally treated dolomite samples", POWDER TECHNOLOGY, Bd. 92, Nr. 3, 1. August 1997 (1997-08-01) , Seiten 253-257, XP55035569, ISSN: 0032-5910, DOI: 10.1016/S0032-5910(97)03246-4
- PISANI JR R ET AL: "Removal of SO2 with particles of dolomite limestone powder in a binary fluidized bed reactor with bubbling fluidization", BRAZILIAN JOURNAL OF CHEMICAL ENGINEERING, BRAZILAIN SOCIETY OF CHEMICAL ENGINEERING, SAO PAULO, BR, Bd. 20, Nr. 2, 1. April 2003 (2003-04-01), Seiten 95-103, XP008154813, ISSN: 0104-6632, DOI: 10.1590/S0104-66322003000200002
- GREENWOOD, N.N. et al.: "Chemie der Elemente", 1988 ISBN: 3-527-26169-9 pages 146-157,
- WEISWEILER et al.: "Trockene Rauchgasentschwefelung mit Kalkstein oder Dolomit: Verbesserung der Entschwefelungswirkung durch Optimierung der Feststoff-Porenstruktur, Pelletierung und chemische Aktivierung", KfK-PEF 31, October 1987 (1987-10), pages 1-89,
- Powerpoint-Folien eines Vortrages der Firma Couple Systems GmbH
- DryEGCS Notice of Compliance

## Beschreibung

Die Erfindung betrifft ein Verfahren zur Erhöhung der Absorptionsfähigkeit eines Erdalkalicarbonat und Erdalkalihydroxid enthaltenden Materials gegenüber Schwefeloxiden und/oder anderen Schadstoffen in Rauchgas. Die Erfindung betrifft ferner die Verwendung dieses Materials zur trockenen Rauchgasreinigung.

Auf dem Gebiet der Abgasreinigung kommen zahlreiche Verfahren zur Anwendung. Neben der nassen Abgasreinigung kommt auch die trockene Abgasreinigung zum Einsatz. Erdalkalicarbonat und/oder Erdalkalihydroxid enthaltende Materialien, insbesondere Kalkprodukte, werden in verschiedenen trockenen Rauchgasreinigungsprozessen als Sorbentien zur Abscheidung säurebildender Abgaskomponenten in verschiedenen Temperaturbereichen eingesetzt.

Ziel ist, die im Abgasstrom vorhandenen sauren Schadstoffe, wie Schwefeldioxid, Chlorwasserstoff und Fluorwasserstoff zu neutralisieren und die gebildeten Neutralsalze an geeigneten Abscheidevorrichtungen abzuscheiden. Hierbei kommen z. B. Schüttschichtfilter, Flugstromverfahren i.V.m. Elektrofiltern oder Gewebefilter zum Einsatz.

Die trockene Abgasreinigung wird in verschiedenen Varianten angewandt. Die wesentlichsten Einsatzgebiete sind die Reinigung der Abgase von Kohle- und Braunkohlekraftwerken, Müllverbrennungsanlagen, Sondermüllverbrennungsanlagen, Wärme-Kraft-Maschinen und Feuerungsanlagen mit unterschiedlichstem Einsatzmaterial.

Eine weit verbreitete Technik im Temperaturbereich bis zumeist ca. 200°C ist die Schüttschichtfiltertechnik. Hier kommen Sorbentien auf Basis von Kalkstein (CaCO₃), insbesondere granulierten oder pelletierten Produkten auf Basis von Kalkstein (CaCO₃) und/oder Kalkhydrat (Ca(OH)₂) und/oder den entsprechenden dolomitischen Produkten zum Einsatz. In diesen Filtern wird eine körnige Schüttschicht aus Erdalkalicarbonat und/oder Erdalkalihydroxid enthaltendem Material vom zu reinigenden Abgas durchströmt. Hierbei findet die Abscheidung der sauren Abgaskomponenten an dem Erdalkalicarbonat und/oder Erdalkalihydroxid enthaltendem Material (Sorbens) statt.

Mit Hilfe der trockenen Abgasreinigung lassen sich die schadstoffhaltigen Abgase weitestgehend reinigen. Von Nachteil ist jedoch, dass der Verbrauch an Erdalkalicarbonat und/oder Erdalkalihydroxid enthaltendem Sorbens sehr hoch ist. Der mäßige Wirkungsgrad der trockenen Abgasreinigung ist darauf zurückzuführen, dass die Sorbentien nicht vollständig durchreagieren. Auf dem Sorbens bildet sich eine Schicht aus Reaktionsprodukten, die das weitere Eindringen der abzuscheidenden sauren Schadstoffe erschwert.

Ein Mangel der Schüttschichtfiltertechnik ist der relativ hohe Verbrauch für die Abscheidung von Schwefeloxiden (SO₂ und SO₃) und das Verschließen der reaktiven Oberfläche der Sorbentien durch die sich bildenden Reaktionsprodukte wie z.B. Calciumsulfit (CaSO₃) und Calciumsulfat (CaSO₄).

Es ist immer wieder versucht worden, den hohen Sorbens-Verbrauch zu senken. Ein Verfahren besteht darin, nach der Abgasreinigung das abgeschiedene Produkt, das aus nichtumgesetztem Sorbens und den gebildeten Reaktionsprodukten besteht, mechanisch wiederaufzubereiten. Sinn und Zweck der mechanischen Behandlung besteht darin, die äußeren, nicht reaktionsfähigen Schichten abzutrennen. Ein weiteres Verfahren sieht eine Zwischenlagerung des Reaktionsproduktes und einen erneuten Einsatz nach einer Lagerung von 1-2 Tagen vor.

Alle diese Verfahren sind jedoch von einer ungenügenden Wirksamkeit hinsichtlich der Steigerung der Absorptionsfähigkeit des Sorbens gekennzeichnet.

Unter Steigerung der Absorptionsfähigkeit des Sorbens wird die Verringerung der Sorbens-Menge zur Erreichung eines bestimmten Abscheidegrads der sauren Schadstoffe verstanden. Eine höhere Absorptionsfähigkeit führt dabei zu einer Verringerung des stöchiometrischen Faktors.

Es besteht ein erhebliches Interesse, aktivierte Erdalkalicarbonat und/oder Erdalkalihydroxid enthaltende Materialien herzustellen, die eine erhöhte Absorptionsfähigkeit gegenüber den Schwefeloxiden und/oder anderen Schadstoffen in Rauchgas aufweisen.

WO 2006/113301 A1 beschreibt ein Verfahren zur Erhöhung der Absorptionsfähigkeit eines Kalkhydrat enthaltenden Materials, welches durch Erhitzen auf 475°C für einen Zeitraum von vier Stunden aktiviert wird. Das aktivierte Kalkhydrat wird anschließend zur Abscheidung von Schwefeldioxid aus einem Abgas mittels eines Flugstromverfahrens verwendet.

WO 2011/039034 A1 beschreibt ein granuliertes Entschwefelungsmittel, welches Calciumcarbonat und Kalkhydrat enthält. Es findet in einem Temperaturbereich von 100°C bis 900°C, bevorzugt von 130°C bis 450°C Verwendung in der Abgasentschwefelung von Verbrennungsmotoren, insbesondere auch großen Schiffsdieselmotoren. Diese Aufgabe wird erfindungsgemäß gelöst durch ein Verfahren gemäß des Anspruchs 1. Unter Erdalkalicarbonat und Erdalkalihydroxid enthaltendem Material im Sinne dieser Erfindung werden alle Materialien verstanden, die mindestens ein Erdalkalicarbonat und mindestens ein Erdalkalihydroxid enthalten oder aus einem dieser Stoffe bestehen. Insbesondere ist unter Erdalkalicarbonat und Erdalkalihydroxid enthaltendem Material sowohl kalk- als auch dolomitstämmiges Material zu verstehen. Eine bevorzugte Ausführungsform der Erfindung sieht vor, dass das Erdalkalicarbonat und Erdalkalihydroxid enthaltende Material Calciumcarbonat, Calciumhydroxid, Magnesiumcarbonat und/oder Magnesiumhydroxid enthält. Unter Erdalkalicarbonaten werden erfindungsgemäß alle Salze und Ester der Kohlensäure, also insbesondere sekundäre Carbonate, Hydrogencarbonate, Orthocarbonate und Kohlensäureester, verstanden, die ein Erdalkalimetall enthalten. Zu den Erdalkalimetallen zählen unter anderem Magnesium, Calcium, Beryllium, Strontium und Barium. Gemäß einer bevorzugten Ausführungsform der Erfindung handelt es sich bei dem Erdalkalicarbonat um Magnesium- oder Calciumcarbonat bzw. einer Mischung daraus. Besonders geeignete Erdalkalicarbonate sind in kalk- und/oder dolomitstämmigen Produkten vorhanden. Gemäß einer bevorzugten Ausführungsform der Erfindung wird als Erdalkalicarbonat enthaltendes Material ein Material auf Basis von Kalkstein und/oder Dolomit verwendet.

Unter Erdalkalihydroxiden werden erfindungsgemäß sämtliche Verbindungen verstanden, die ein Erdalkalimetall und die einwertige Atomgruppierung -OH als funktionelle Gruppe oder Ion enthalten. Zu den Erdalkalimetallen zählen unter anderem Magnesium, Calcium, Beryllium, Strontium und Barium. Gemäß einer bevorzugten Ausführungsform der Erfindung handelt es sich bei dem Erdalkalihydroxid um Magnesium- oder Calciumhydroxid bzw. einer Mischung daraus. Besonders geeignete Erdalkalihydroxide sind in kalk- und/oder dolomitstämmigen Produkten vorhanden. Gemäß einer bevorzugten Ausführungsform der Erfindung wird als Erdalkalihydroxid enthaltendes Material ein Material auf Basis von Kalkhydrat (Löschkalk) und/oder Dolomithydrat verwendet.

Überraschend wurde gefunden, dass die Abscheideleistung von Erdalkalicarbonat und Erdalkalihydroxid enthaltenden Materialien gegenüber sauren Gaskomponenten, insbesondere Schwefeldioxid in Rauchgas, verbessert werden kann, wenn das Material auf Temperaturen zwischen etwa 200°C bis etwa 850°C erhitzt wird. Ohne an wissenschaftliche Theorie gebunden sein zu wollen, scheint das Erhitzen zu einer Aktivierung der Erdalkalicarbonat und Erdalkalihydroxid enthaltenden Sorbentien zu führen. So kann bereits durch einmaliges Erhitzen auf Temperaturen zwischen etwa 200°C bis etwa 850°C eine deutliche Erhöhung der Absorptionsfähigkeit von Erdalkalicarbonat und/oder Erdalkalihydroxid enthaltenden Materialien (Sorbentien) erzielt werden.

Das erfindungsgemäße Verfahren ermöglicht somit eine effektivere Abscheidung von Schadstoffen und somit eine Minimierung des Bedarfs an Erdalkalicarbonat und Erdalkalihydroxid enthaltendem Material (Sorbens) in der trockenen Rauchgasreinigung.

Praktische Versuche haben ergeben, dass eine besonders starke Erhöhung der Absorptionsfähigkeit des Sorbens erzielt werden kann, wenn das Erdalkalicarbonat und Erdalkalihydroxid enthaltende Material auf Temperaturen von etwa 250°C bis etwa 750°C insbesondere von etwa 300°C bis etwa 500°C erhitzt wird. Es wurde beobachtet, dass oberhalb von etwa 850°C der Aktivierungseffekt nicht mehr eintritt. Vermutlich liegt dies daran, dass bei diesen Temperaturen weniger gut absorbierende, gebrannte Produkte entstehen. Beispielsweise wurde bei Verwendung von kalkstämmigem Material beobachtet, dass bei Aktivierungstemperaturen oberhalb von etwa 850°C das weniger gut absorbierende Calciumoxid gebildet wird. Bei Erhitzen auf Temperaturen von unter 200°C war ebenfalls keine merkliche Aktivierung des Erdalkalicarbonat und/oder Erdalkalihydroxid enthaltenden Materials feststellbar.

Das Erhitzen des Erdalkalicarbonat und Erdalkalihydroxid enthaltenden Materials kann auf verschiedene dem Fachmann bekannte Arten und Weisen erfolgen. So kann das Erhitzen beispielsweise in einem Ofen oder durch Anströmen mit heißem Abgas in Wirbelbett oder Fließbett bzw. in Schüttschichtfiltern erfolgen.

Der Zeitraum, in dem das Erdalkalicarbonat und Erdalkalihydroxid enthaltende Material erhitzt und damit aktiviert wird kann in weiten Bereichen variieren. Insbesondere wurde festgestellt, dass die optimale Aktivierungszeit von dem verwendeten Material und der gewählten Aktivierungstemperatur abhängt. Der Fachmann kann die für ein bestimmtes Material optimalen Aktivierungsparameter, insbesondere Aktivierungszeit und Aktivierungstemperatur, durch Versuchsreihen bestimmen.

Aus energetischen Gründen ist es vorteilhaft, den Zeitraum des Erhitzens zu begrenzen. Als besonders zweckmäßig hat sich erwiesen, das Erdalkalicarbonat und Erdalkalihydroxid enthaltende Material für einen Zeitraum von 1 Minute bis 12 Stunden, vorzugsweise 10 Minuten bis 12 Stunden, besonders bevorzugt 1 Stunde bis 6 Stunden, insbesondere 2 bis 5 Stunden zu erhitzen. Bei sehrfeinteiligen Materialien und/oder geeigneter Wahl der Aktivierungstemperatur und optimierter Erhitzungsmethode sind auch kürzere Erhitzungszeiten möglich. Erfindungsgemäß wird das Erdalkalicarbonat und Erdalkalihydroxid enthaltende Material vor seiner Verwendung als Sorbens in einem separaten Schritt aktiviert.

Versuche haben gezeigt, dass die erfindungsgemäße thermische Aktivierung auch anhält, wenn das Erdalkalicarbonat und Erdalkalihydroxid enthaltende Material nach der Aktivierung wieder abgekühlt wird. Eine Ausführungsform der Erfindung sieht demnach vor, dass in einem weiteren Schritt das aktivierte Erdalkalicarbonat und Erdalkalihydroxid enthaltende Material auf Raumtemperatur abgekühlt wird.

Erfindungsgemäß wird das Erdalkalicarbonat und Erdalkalihydroxid enthaltende Material im Rahmen seiner Verwendung in der trockenen Rauchgasreinigung einmalig oder kontinuierlich auf Temperaturen von etwa 300°C bis etwa 500°C erhitzt. Das Erdalkalicarbonat und Erdalkalihydroxid enthaltende Material kann sich gemäß einer weiteren Ausführungsform schon während des Erhitzens in einem für die Rauchgasreinigung gebrauchsfertigen Filter, insbesondere einem Schüttschichtfilter oder einer Filterpatrone befinden.

Als Erdalkalicarbonat und Erdalkalihydroxid enthaltende Materialien eignen sich erfindungsgemäß insbesondere alle Materialien auf der Basis von Kalkstein und/oder Dolomit, die zur Abscheidung von sauren Komponenten in Rauchgas, insbesondere Schwefeldioxid geeignet sind. Besonders gute Ergebnisse werden bei der Verwendung von speziell für die Rauchgasreinigung entwickelten kalk- oder dolomitstämmigen Produkten mit besonders großer Oberfläche erzielt. Erfindungsgemäß wird als Erdalkalicarbonat und/oder Erdalkalihydroxid enthaltendes Material Calciumhydroxid und/oder Calciumcarbonat sowie Produkte verwendet, die anteilig Calciumhydroxid und/oder Calciumcarbonat enthalten.

Praktische Versuche haben gezeigt, dass die erfindungsgemäße, thermische Aktivierung besonders gut bei Materialien funktioniert, die zumindest anteilig Erdalkalihydroxide enthalten. Besonders gute Aktivierungen stellen sich ein, wenn das Material einen Erdalkalihydroxid-Anteil von etwa 5 bis etwa 25 Gew.-% oder von etwa 10 bis etwa 15 Gew.-% aufweist.

Die Partikelgröße des Erdalkalicarbonat und Erdalkalihydroxid enthaltenden Materials kann in weiten Bereichen variieren. Besonders gute Abscheideleistungen werden mit Granalien sowie granulierten oder pelletierten Produkten erzielt. Die Partikelgrößen der Granalien bzw. granulierten oder pelletierten Materialien bewegen sich vorzugsweise im Bereich von etwa 0,1 bis etwa 50 mm, besonders bevorzugt zwischen etwa 1 mm bis etwa 10 mm und insbesondere zwischen etwa 2 mm bis etwa 6 mm.

Das mit dem erfindungsgemäßen Verfahren hergestellte aktivierte Erdalkalicarbonat und Erdalkalihydroxid enthaltende Produkt eignet sich hervorragend als Sorbens zur Absorption von Schwefeloxiden und/oder anderen Schadstoffen in der trockenen Rauchgasreinigung. Gegenstand der vorliegenden Erfindung ist ferner auch die Verwendung des mit dem erfindungsgemäßen Verfahren hergestellten Erdalkalicarbonat und Erdalkalihydroxid enthaltenden Produkts in der in der trockenen Rauchgasreinigung.

Praktische Versuche haben ergeben, dass besonders gute Abscheideleistungen erzielt werden, wenn das Erdalkalicarbonat und Erdalkalihydroxid enthaltende Material als Füllmaterial in einem Schüttschichtfilter eingesetzt wird. In dieser Ausführungsform der Erfindung durchströmt das zu reinigende Gas eine lockere körnige Schicht Erdalkalicarbonat und Erdalkalihydroxid enthaltenden Materials, das als Filtermedium dient. Der Körnungsbereich des Erdalkalicarbonat und Erdalkalihydroxid enthaltenden Materials bewegt sich vorzugsweise zwischen etwa 0,1 mm und etwa 10 mm, noch bevorzugter zwischen etwa 2 mm und etwa 6 mm, insbesondere zwischen etwa 3 mm bis etwa 5 mm. Die Aktivierung kann dabei entweder während des Betriebs des Schüttschichtfilters vorgenommen werden oder das Erdalkalicarbonat und Erdalkalihydroxid enthaltende Material wird erfindungsgemäß vorab aktiviert, also bevor es als Sorbens im Schüttschichtfilter zum Einsatz kommt.

Die Strömungsgeschwindigkeiten im Schüttschichtfilter können in weiten Bereichen variieren. So können beispielsweise Geschwindigkeiten zwischen 0,1 m/s und 5 m/s eingestellt werden. Die Schichthöhen können je nach gefordertem Abscheidegrad und Druckverlust bis zu einigen Metern betragen. Bevorzugte Schichthöhen liegen im Bereich von etwa 100 mm bis etwa 500 mm, insbesondere von etwa 200 mm bis etwa 400 mm.

Die Abscheidung von Partikeln in Schüttschichtfiltern kann erfindungsgemäß in einem Festbett (ruhende Schüttschicht), einem Fließbett, einem Wanderbett (bewegte Schüttschicht) sowie einer Wirbelschicht (von der Gasströmung getragene Schicht) erfolgen. Besonders zweckmäßig ist die Verwendung von Schüttschichtfiltern mit ruhender Schüttung.

Gemäß einer bevorzugten Ausführungsform wird die Betriebstemperatur im Schüttschichtfilter auf Temperaturen von mehr als 200°C erhöht und somit eine Erhöhung der Absorptionsfähigkeit des Erdalkalicarbonat und Erdalkalihydroxid enthaltenden Materials bewirkt. Bei vielen Erdalkalicarbonat und Erdalkalihydroxid enthaltenden Materialien lässt sich ein Maximum der Effektivität bei einer Aktivierungstemperatur von etwa 400°C erzielen.

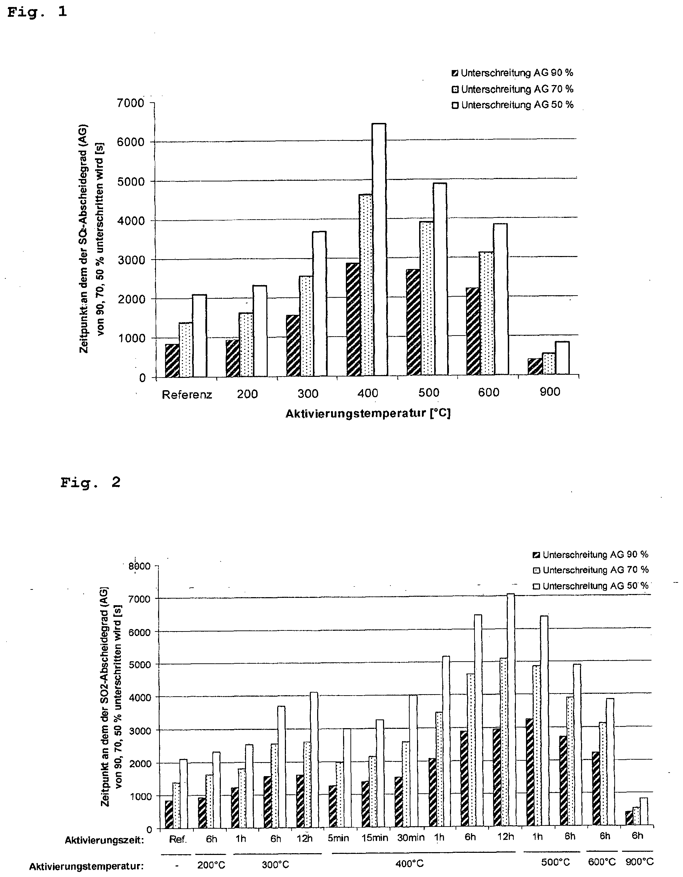

Wie in Abbildung 1 gezeigt, tritt bei Erhöhung der Aktivierungstemperatur bei anschließender Verwendung des aktivierten Materials als Filtermedium im Schüttschichtfilter eine deutliche Verbesserung der Abscheideleistung auf. Ein Maximum der Effektivität wird dabei bei etwa 400°C erreicht.

Es ist jedoch gemäß einer weiteren erfindungsgemäßen Ausführungsform ebenso möglich, das Erhitzen des Erdalkalicarbonat und Erdalkalihydroxid enthaltenden Materials direkt im Schüttschichtfilter durchzuführen.

Aus energetischen Gründen wird das Erdalkalicarbonat und Erdalkalihydroxid enthaltende Material vor seinem Einsatz, beispielsweise einmalig, auf eine Temperatur zwischen 300°C bis 500°C erhitzt. Die wesentlichen Vorteile dieses erfindungsgemäßen Vorgehens sind die folgenden:
1. Das Verfahren ist energetisch effizient, da das Filter nicht dauerhaft bei hohen Temperaturen betrieben werden muss.
2. Das Filter kann wie bisher bei den üblichen, niedrigen Temperaturen unterhalb von 200°C und damit kostengünstiger betrieben werden.
3. Die Aktivierung durch Erhitzen kann beim Hersteller des Erdalkalicarbonat und Erdalkalihydroxid enthaltenden Materials (Sorbens) durchgeführt werden.
4. Der Bedarf an Erdalkalicarbonat und Erdalkalihydroxid enthaltendem Material kann durch effektivere Abscheidung minimiert werden.

Das erfindungsgemäße Verfahren wird im Folgenden anhand von Ausführungsbeispielen näher erläutert.

### Beispiel 1

Im Laborversuch wurde der Einfluss einer thermischen Aktivierung auf die Absorptionsfähigkeit eines Sorbens für die trockenen Rausgasreinigung untersucht. Es wurde ein Sorbens verwendet, das aus Granalien, welche etwa 90 Gew.-% Calciumcarbonat und etwa 10 Gew.-% Kalkhydrat enthalten, besteht. zunächst wurde das Sorbens in 7 Chargen à 200 g aufgeteilt. Die erste Charge diente als Referenzprobe und wurde nicht weiter behandelt. Chargen 2 bis 7 wurden bei 200°C, 300°C, 400°C, 500°C, 600°C bzw. 900°C in entsprechend temperierten Öfen für 6 Stunden gelagert. Bei den Chargen 2, 6 und 7 handelt es sich um Vergleichsbeispiele. Anschließend wurde die unterschiedlich aktivierten Sorbentien auf Raumtemperatur abgekühlt und jeweils in die dafür vorgesehene Patrone eines 160ml Labor-Schüttschichtfilter eingefüllt. Für jedes Material wurde nun die Absorptionsfähigkeit im Vergleich zum Referenzmaterial durch Aufnahme von SO₂-Durchbruchskurven im Laborschüttschichtfilter bestimmt. Hierzu wurden die mit dem bei unterschiedlichen Temperaturen aktivierten Probenmaterial oder Referenzmaterial befüllten Schüttschichtfilter bei 160 bis 170°C mit ebenso temperiertem N₂/SO₂ Prüfgasgemisch mit einer SO₂ Konzentration von 2000 ppm durchströmt. Das Gas durchströmte dabei den Filter mit einer Geschwindigkeit von 0,1 m/s bei einem Druck von etwa 30 bis 60 mmWS (Verweilzeit ca. 2 s). Dem Filter nachgeschaltet war eine computergestützte, kontinuierliche Gasanalyseeinheit (Fa. MSI, Typ MSI 2000), welche die SO₂ Konzentration im Filterdurchstrom aufzeichnete. Die Differenz zwischen SO₂ Konzentration vor dem Filter (2000 ppm) und nach dem Filter wurde als Abscheidegrad errechnet. Zum Zeitpunkt null war der Abscheidegrad in allen Fällen 100%, d.h. das Filtermaterial war in der Lage, das SO₂ im durchströmenden Prüfgas vollständig zurückzuhalten. Ab einer gewissen Zeit zeigte sich jedoch eine Reduktion des Abscheidegrads, d.h. ein Durchbruch von SO₂ im Filterdurchstrom, was wahrscheinlich durch die allmähliche Absättigung des Sorbens mit SO₂ bedingt ist. Je stärker die Absorptionsfähigkeit des Sorbens ist, desto länger wird das SO₂ im Prüfgas im Filter zurückgehalten und desto langsamer verläuft die Reduktion der Abscheidegradwerte bzw. des SO₂-Durchbruchs. Charakteristische Werte sind die Zeitpunkte nach Versuchsbeginn, an denen der Abscheidegrad von 90%, 70% oder 50% unterschritten wird. Diese Werte sind in Figur 1 für das unbehandelte Referenzmaterial und die bei unterschiedlichen Temperaturen aktivierten Probenmaterialen aufgetragen. Überraschenderweise zeigte sich, dass bereits eine einmalige thermische Aktivierung des Sorbens eine starke Erhöhung der Absorptionsfähigkeit zur Folge hatte. So zeigt ein Material, dass bei 400°C aktiviert wurde, eine Steigerung des SO₂ Absorptionsvermögens um etwa 200% im Vergleich zum Referenzmaterial. Selbst bei einer Aktivierungstemperatur von nur 200°C zeigten sich schon leichte Verbesserungen im Absorptionsvermögen des so aktivierten Materials. Bei einer Aktivierungstemperatur von 900°C hingegen kam es zu einer Verschlechterung des Absorptionsvermögens. Beste Ergebnisse wurden bei Aktivierungstemperaturen von 300 bis 500°C erzielt.

### Beispiel 2

In einer zweiten Versuchsreihe wurde der Einfluss der Aktivierungszeit auf das Absorptionsvermögen des Materials untersucht. Hierzu wurde entsprechend der Versuchsdurchführung gemäß Beispiel 1 verfahren. Einzig die Aktivierungszeit (Verweildauer im Ofen) wurde variiert. Entsprechend Beispiel 1 wurde anschließend das SO₂ Absorptionsvermögen der unterschiedlich lange und bei unterschiedlichen Temperaturen aktivierten Materialien untersucht. Die Ergebnisse sowie die Aktivierungsbedingungen sind in Figur 2 abgebildet. Dabei zeigt sich, dass je näher die Aktivierungstemperatur 400°C ist, umso kürzere Aktivierungszeiten sind erforderlich um vergleichsweise gute Absorptionsfähigkeiten zu erzielen. So zeigt eine 30-minütige Aktivierung bei 400°C in etwa die gleiche Verbesserung der Absorptionsfähigkeit wie eine 12-stündige Aktivierung bei 300°C. Die Versuche zeigen ferner, dass bei optimaler Aktivierungstemperatur schon sehr geringe Aktivierungszeiten (s. Fig. 2, 5-minütige Aktivierung bei 400°C) zu deutlichen Verbesserungen der Absorptionsfähigkeit im Vergleich zum Referenzmaterial führen. Bei manchen Aktivierungstemperaturen zeigte sich eine weitere Verbesserung der Absorptionsfähigkeit mit steigender Aktivierungszeit (vgl. Fig. 2, 300°C und 400°C). Bei einer Aktivierungstemperatur von 500°C führte hingegen eine 1-stündige Aktivierung zu besseren Ergebnissen als eine 6-stündige Aktivierung. Wie in Beispiel 1 zeigte das bei 900°C aktivierte Material schlechtere Absorptionsfähigkeit als das Referenzmaterial.

### Beispiel 3

Ein mit einem Erdalkalicarbonat und Erdalkalihydroxid enthaltenden Sorbens befüllter Schüttschichtfilter in einem Heizkraftwerk wird durch etwa 400°C heißes, durchströmendes Gas einmalig für 2 Stunden aktiviert. Danach wird der Schüttschichtfilter weiter bei einer regulären Betriebstemperatur von unter 200°C betrieben. Die thermische Aktivierung bewirkt eine Verbesserung der Schadstoff Absorptionsfähigkeit des Schüttschichtfilters.

### Beispiel 4 (Vergleichsbeispiel)

Granalien aus CaCO₃ und Ca(OH)₂ werden im großtechnischen Fließbett-Prozess mit 270°C heißem Gas durchströmt und dabei getrocknet und gehärtet. Durch Verlängerung der Verweilzeit wird das Material über den Trocknungspunkt hinaus auf die Heißgastemperatur erhitzt und dabei aktiviert.

## Patentansprüche

1. Verfahren zur Erhöhung der Absorptionsfähigkeit eines Erdalkalicarbonat und Erdalkalihydroxid enthaltenden Materials gegenüber Schwefeloxiden und/oder anderen Schadstoffen in Rauchgas, **dadurch gekennzeichnet, dass** das Erdalkalicarbonat und Erdalkalihydroxid enthaltende Material vor seiner Verwendung als Sorbens in einem separaten Schritt durch Erhitzen auf 300°C bis 500°C für einen Zeitraum von 1 Minute bis 12 Stunden aktiviert wird, wobei das in dem separaten Schritt zu aktivierende Erdalkalicarbonat und Erdalkalihydroxid enthaltende Material einen Erdalkalihydroxid-Anteil von 5 bis 25 Gew.-% aufweist und wobei als Erdalkalicarbonat und Erdalkalihydroxid enthaltendes Material Calciumcarbonat und Calciumhydroxid verwendet wird.

2. Verfahren nach einem der vorangehenden Ansprüche, **dadurch gekennzeichnet, dass** das Erhitzen des Erdalkalicarbonat und Erdalkalihydroxid enthaltenden Materials für einen Zeitraum von 10 Minuten bis 12 Stunden durchgeführt wird.

3. Verfahren nach einem der vorangehenden Ansprüche, **dadurch gekennzeichnet, dass** das Erdalkalicarbonat und Erdalkalihydroxid enthaltende Material als Granulat, Granalien oder Pellets vorliegt.

4. Verfahren nach einem der vorangehenden Ansprüche, **dadurch gekennzeichnet, dass** das Erdalkalicarbonat und Erdalkalihydroxid enthaltende Material eine mittlere Partikelgröße von 0,1 bis 50 mm, insbesondere von 1 bis 10 mm aufweist.

5. Verfahren nach einem der vorangehenden Ansprüche, **dadurch gekennzeichnet, dass** in einem weiteren Schritt das aktivierte Erdalkalicarbonat und Erdalkalihydroxid enthaltende Material auf Raumtemperatur abgekühlt wird.

6. Verfahren nach einem der vorangehenden Ansprüche, **dadurch gekennzeichnet, dass** das Erdalkalicarbonat und Erdalkalihydroxid enthaltende Material sich in einem Filter, insbesondere einem Schüttschichtfilter oder einer Filterpatrone befindet.

7. Verwendung eines nach einem Verfahren gemäß einem oder mehreren der Ansprüche 1 bis 6 hergestellten aktivierten Erdalkalicarbonat und Erdalkalihydroxid enthaltenden Materials zur Absorption von Schwefeloxiden und/oder anderen Schadstoffen zur trockenen Rauchgasreinigung.

8. Verwendung nach Anspruch 7, **dadurch gekennzeichnet, dass** das aktivierte Erdalkalicarbonat und Erdalkalihydroxid enthaltende Material als Füllmaterial in einem Schüttschichtfilter eingesetzt wird.

9. Verwendung nach Anspruch 8 **dadurch gekennzeichnet, dass** das aktivierte Erdalkalicarbonat und Erdalkalihydroxid enthaltende Material durch Erhitzen des Materials im Schüttschichtfilter hergestellt wird.

10. Verwendung nach Anspruch 7, **dadurch gekennzeichnet, dass** das aktivierte Erdalkalicarbonat und Erdalkalihydroxid enthaltende Material in einem Wirbel-oder Fließbett verwendet wird.

11. Verwendung nach Anspruch 7, **dadurch gekennzeichnet, dass** das aktivierte Erdalkalicarbonat und Erdalkalihydroxid enthaltende Material in einem Flugstromverfahren verwendet wird.

## Claims

1. Process for increasing the absorption capacity of a material containing alkaline earth metal carbonate and alkaline earth metal hydroxide toward sulfur oxides and/or other noxiants in flue gas, **characterized in that** the material containing alkaline earth metal carbonate and alkaline earth metal hydroxide is activated in a separate step by heating to 300°C to 500°C for a period of 1 minute to 12 hours before its use as sorbent, wherein the material containing alkaline earth metal carbonate and alkaline earth metal hydroxide that is to be activated in the separate step has an alkaline earth metal hydroxide content of 5 to 25 % by weight and wherein calcium carbonate and calcium hydroxide is used as the material containing alkaline earth metal carbonate and alkaline earth metal hydroxide.

2. Process according to any of the preceding claims, **characterized in that** the heating of the material containing alkaline earth metal carbonate and alkaline earth metal hydroxide is performed for a period of 10 minutes to 12 hours.

3. Process according to any of the preceding claims, **characterized in that** the material containing alkaline earth metal carbonate and alkaline earth metal hydroxide is present in the form of granulate, granules or pellets.

4. Process according to any of the preceding claims, **characterized in that** the material containing alkaline earth metal carbonate and alkaline earth metal hydroxide has an average particle size of 0.1 to 50 mm, in particular of 1 to 10 mm.

5. Process according to any of the preceding claims, **characterized in that** in a further step the activated material containing alkaline earth metal carbonate and alkaline earth metal hydroxide is cooled to room temperature.

6. Process according to any of the preceding claims, **characterized in that** the material containing alkaline earth metal carbonate and alkaline earth metal hydroxide is located in a filter, in particular a packed-bed filter or a filter cartridge.

7. Use of an activated material containing alkaline earth metal carbonate and alkaline earth metal hydroxide produced by a process according to one or more of Claims 1 to 6 for absorption of sulfur oxides and/or other noxiants for dry flue gas cleaning.

8. Use according to Claim 7, **characterized in that** the activated material containing alkaline earth metal carbonate and alkaline earth metal hydroxide is employed as a filling material in a packed-bed filter.

9. Use according to Claim 8, **characterized in that** the activated material containing alkaline earth metal carbonate and alkaline earth metal hydroxide is produced by heating the material in the packed-bed filter.

10. Use according to Claim 7, **characterized in that** the activated material containing alkaline earth metal carbonate and alkaline earth metal hydroxide is used in a fluidized or moving bed.

11. Use according to Claim 7, **characterized in that** the activated material containing alkaline earth metal carbonate and alkaline earth metal hydroxide is used in an entrained-flow process.

## Revendications

1. Procédé pour l'augmentation de la capacité d'absorption d'un matériau contenant du carbonate de métal alcalino-terreux et de l'hydroxyde de métal alcalino-terreux vis-à-vis des oxydes de soufre et/ou d'autres polluants dans les gaz de fumée, **caractérisé en ce que** le matériau contenant du carbonate de métal alcalino-terreux et de l'hydroxyde de métal alcalino-terreux est activé avant son utilisation comme absorbant dans une étape séparée par chauffage à 300°C jusqu'à 500°C pendant une période de 1 minute à 12 heures, dans laquelle le matériau contenant du carbonate de métal alcalino-terreux et de l'hydroxyde de métal alcalino-terreux à activer dans l'étape séparée a une teneur en l'hydroxyde de métal alcalino-terreux de 5 à 25% en poids et dans laquelle le carbonate de calcium et l'hydroxyde de calcium est utilisé comme matériau contenant du carbonate de métal alcalino-terreux et de l'hydroxyde de métal alcalino-terreux.

2. Procédé selon l'une quelconque des revendications précédentes, **caractérisé en ce que** le chauffage du matériau contenant du carbonate de métal alcalino-terreux et de l'hydroxyde de métal alcalino-terreux est réalisé pendant une période de 10 minutes à 12 heures.

3. Procédé selon l'une quelconque des revendications précédentes, **caractérisé en ce que** le matériau contenant du carbonate de métal alcalino-terreux et de l'hydroxyde de métal alcalino-terreux se trouve sous forme de granulat, de granules ou de pellets.

4. Procédé selon l'une quelconque des revendications précédentes, **caractérisé en ce que** le matériau contenant du carbonate de métal alcalino-terreux et de l'hydroxyde de métal alcalino-terreux présente une taille moyenne de particule de 0,1 à 50 mm, en particulier de 1 à 10 mm.

5. Procédé selon l'une quelconque des revendications précédentes, **caractérisé en ce que** le matériau activé contenant du carbonate de métal alcalino-terreux et de l'hydroxyde de métal alcalino-terreux est refroidi à température ambiante dans une étape consécutive.

6. Procédé selon l'une quelconque des revendications précédentes, **caractérisé en ce que** le matériau contenant du carbonate de métal alcalino-terreux et de l'hydroxyde de métal alcalino-terreux se trouve dans un filtre, en particulier un filtre à lit tassé ou une cartouche filtrante.

7. Utilisation d'un matériau activé contenant du carbonate de métal alcalino-terreux et de l'hydroxyde de métal alcalino-terreux produit par un procédé selon une ou plusieurs des revendications 1 à 6 pour l'absorption d'oxydes de soufre et/ou d'autres polluants pour la purification par voie sèche de gaz de fumée.

8. Utilisation selon la revendication 7, **caractérisée en ce que** le matériau activé contenant du carbonate de métal alcalino-terreux et de l'hydroxyde de métal alcalino-terreux est utilisé comme matériau de remplissage dans un filtre à lit tassé.

9. Utilisation selon la revendication 8, **caractérisée en ce que** le matériau activé contenant du carbonate de métal alcalino-terreux et de l'hydroxyde de métal alcalino-terreux est préparé par chauffage du matériau dans le filtre à lit tassé.

10. Utilisation selon la revendication 7, **caractérisée en ce que** le matériau activé contenant du carbonate de métal alcalino-terreux et de l'hydroxyde de métal alcalino-terreux est utilisé dans un lit tourbillonnant ou un lit fluidisé.

11. Utilisation selon la revendication 7, **caractérisée en ce que** le matériau activé contenant du carbonate de métal alcalino-terreux et de l'hydroxyde de métal alcalino-terreux est utilisé dans un procédé à flux entraîné.
